(19) Europäisches Patentamt
European Patent Office
Office européen des brevets

(11) EP 2 894 984 B1

(12) EUROPEAN PATENT SPECIFICATION

(45) Date of publication and mention of the grant of the patent:
**03.06.2020 Bulletin 2020/23**

(21) Application number: **13836450.0**

(22) Date of filing: **11.09.2013**

(51) Int Cl.:
***A01P 13/00*** *(2006.01)* ***A01N 43/40*** *(2006.01)*

(86) International application number:
**PCT/US2013/059115**

(87) International publication number:
**WO 2014/043151 (20.03.2014 Gazette 2014/12)**

# (54) HERBICIDAL COMPOSITIONS COMPRISING AMINOPYRALID AND TRICLOPYR

HERBIZIDZUSAMMENSETZUNGEN MIT AMINOPYRALID UND TRICLOPYR

COMPOSITIONS HERBICIDES COMPRENANT DE L'AMINOPYRALIDE ET DU TRICLOPYR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.09.2012 US 201261700687 P**

(43) Date of publication of application:
**22.07.2015 Bulletin 2015/30**

(73) Proprietor: **Dow AgroSciences LLC**
**Indianapolis, IN 46268 (US)**

(72) Inventors:
- **CARRANZA GARZON, Nelson M.**
  **Ibague (CO)**
- **MANN, Richard K.**
  **Franklin, IN 46131 (US)**

(74) Representative: **f & e patent**
**Fleischer, Engels & Partner mbB, Patentanwälte**
**Braunsberger Feld 29**
**51429 Bergisch Gladbach (DE)**

(56) References cited:
**US-A1- 2007 117 721**
**US-A1- 2007 191 229**
**US-A1- 2009 062 127**
**US-A1- 2010 105 558**
**US-A1- 2010 105 558**
**US-A1- 2012 184 441**
**US-A1- 2012 184 441**

- **CHRISTOPHER R MUDGE ET AL: "Evaluation of Commercially Available Herbicide Mixes for Control of Rosette Stage Yellow Starthistle (Centaurea solstitialis L.)", US ARMY CORPS OF ENGINEERS ERDC/EL TN-11-3, August 2011 (2011-08), pages 1-8, XP55243407,**
- **JASON FERRELL ET AL: "Herbicidal Control of Largeleaf Lantana (Lantana camara)", WEED TECHNOLOGY,, vol. 26, no. 3, 5 August 2012 (2012-08-05) , pages 554-558, XP009189889, ISSN: 0890-037X**
- **TRAN H ET AL: "ASSESSMENT OF HERBICIDES FOR SELECTIVELY CONTROLLING BROOM (CYTISUS SCOPARIUS) GROWING WITH PINUS RADIATA", PROCEEDINGS OF THE AUSTRALIAN WEEDS CONFERENCE, XX, XX, 26 September 2010 (2010-09-26), page 372, XP003035953,**
- **MUDGE, CHRISTOPHER R. ET AL.: 'Evaluation of Commercially Available Herbicide Mixes for Control of Rosette Stage Yellow Starthistle (Centaurea solstitialis L.). No. ERDC/EL TN-11-3.' US ARMY CORPS OF ENGINEERS, ENGINEER RESEARCH AND DEVELOPMENT CENTER 2011, XP055243407**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 894 984 B1

## Description

### Field

Provided herein are herbicidal compositions comprising (a) 4-amino-3,6-dichloro-2-pyridinecarboxylic acid (aminopyralid) or an agriculturally acceptable ester or salt thereof and (b) the choline salt of 2-[(3,5,6-trichloro-2-pyridinyl)oxy] acetic acid (triclopyr).

Provided herein are also methods of controlling undesirable vegetation comprising applying (a) aminopyralid or an agriculturally acceptable ester or salt thereof and (b) triclopyr choline salt.

### Background

The protection of crops from weeds and other vegetation which inhibit crop growth is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use. However, there remains a need for compositions and methods that are effective in controlling undesirable vegetation.

Compositions comprising aminopyralid or a salt thereof and triclopyr butoxyethyl ester are described in US 2010/0105558 A1, US 2012/0184441 A1, US 2009/0062127 A1, and US 2007/0191229 A1. US 2007/0117721 A1 relates to triclopyr butoxyethyl ester compositions, which, among others, may further comprise aminopyralid, and their use for the control of woody vegetation. The control of largeleaf lantana using a triclopyr ester in combination with aminopyralid is described by J. Ferrell et al. (Weed Technology 2012, 26, 554-558). The control of rosette stage yellow starthistle using triclopyr in combination with aminopyralid is described by C. R. Mudge et al. (US Army Corps of Engineers® ERDC/EL TN-11-3, August 2011). The control of broom using a mixture comprising clopyralid, triclopyr, picloram and aminopyralid is described by H. Tran et al. (Proceedings of the 17th Australasian Weed Conference 2010, 372).

### Summary

Provided herein are herbicidal compositions comprising an herbicidally effective amount of:

(a) aminopyralid, a compound of the formula (I)

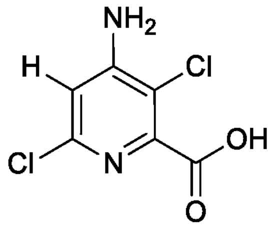

(I)

or an agriculturally acceptable salt or ester of thereof, and

(b) triclopyr choline salt, the choline salt of a compound of the formula (II)

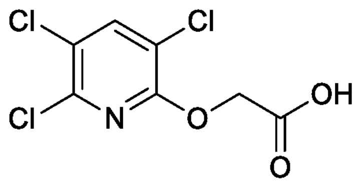

(II)

.

The compositions may also contain an agriculturally acceptable adjuvant or carrier.

Provided herein are also methods of controlling undesirable vegetation comprising applying (a) a compound

of formula (I) or an agriculturally acceptable ester or salt thereof and (b) the choline salt of a compound of formula (II).

Exemplary salts of a compound of formula (I) include aminopyralid triisopropanolammonium, aminopyralid potassium and aminopyralid choline salts..

## Detailed Description

DEFINITIONS

As used herein, the compound of formula (I) has the following structure:

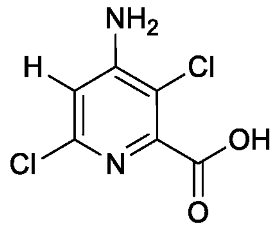

(I)

The compound of formula (I) can be identified by the Chemical Abstracts Service (CAS) name 4-amino-3,6-dichloro-2-pyridinecarboxylic acid and by the common name aminopyralid. Exemplary uses of the compound of the formula (I) include controlling annual and perennial broadleaf weeds in grasses.

As used herein, the compound of formula (II) has the following structure:

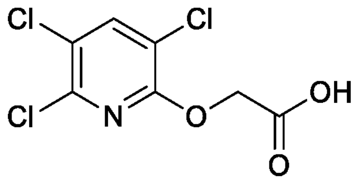

(II)

The compound of formula (II) can be identified by the CAS name 2-[(3,5,6-trichloro-2-pyridinyl)oxy] acetic acid and by the common name triclopyr. Triclopyr is used to control woody plants and many broadleaf weeds including nettles, docks, brambles, morningglory, alligatorweed, gorse and broom in grassland, uncultivated land, industrial areas, coniferous forests, plantation crops and rice fields.

Exemplary salts include those derived from alkali or alkaline earth metals and those derived from ammonia and amines. Exemplary cations include sodium, potassium, magnesium, and aminium (ammonium) cations of the formula:

$$R^1R^2R^3R^4N^+$$

wherein $R^1$, $R^2$, $R^3$ and $R^4$ each, independently represents hydrogen or $C_1$-$C_{12}$ alkyl, $C_3$-$C_{12}$ alkenyl or $C_3$-$C_{12}$ alkynyl, each of which is optionally substituted by one or more hydroxy, $C_1$-$C_4$ alkoxy, $C_1$-$C_4$ alkylthio or phenyl groups, provided that $R^1$, $R^2$, $R^3$ and $R^4$ are sterically compatible. Additionally, any two of $R^1$, $R^2$, $R^3$ and $R^4$ together may represent an aliphatic difunctional moiety containing one to twelve carbon atoms and up to two oxygen or sulfur atoms. Salts can be prepared by treatment with a metal hydroxide, such as sodium hydroxide, with an amine, such as ammonia, trimethylamine, diethanolamine, triisopropanolamine, 2-methylthiopropylamine, bisallylamine, 2-butoxyethylamine, morpholine, cyclododecylamine, or benzylamine or with a tetraalkylammonium hydroxide, such as tetramethylammonium hydroxide or choline hydroxide.

Exemplary esters include those derived from $C_1$-$C_{12}$ alkyl, $C_3$-$C_{12}$ alkenyl, $C_3$-$C_{12}$ alkynyl or $C_7$-$C_{10}$ aryl-substituted alkyl alcohols, each of which is optionally substituted by one or more hydroxy, $C_1$-$C_4$ alkoxy or $C_1$-$C_4$ alkylthio groups, such as methyl alcohol, isopropyl alcohol, 1-butanol, 2-ethylhexanol, butoxyethanol, methoxypropanol, allyl alcohol, propargyl alcohol, cyclohexanol or unsubstituted or substituted benzyl alcohols. Benzyl alcohols may be substituted with from 1-3 substituents independently selected from halogen, $C_1$-$C_4$ alkyl or $C_1$-$C_4$ alkoxy. Esters can be prepared by coupling of the acids with the alcohol using any number of suitable activating agents such as those used

for peptide couplings such as dicyclohexylcarbodiimide (DCC) or carbonyl diimidazole (CDI); by reacting the acids with alkylating agents such as alkylhalides or alkylsulfonates in the presence of a base such as triethylamine or lithium carbonate; by reacting the corresponding acid chloride of an acid with an appropriate alcohol; by reacting the corresponding acid with an appropriate alcohol in the presence of an acid catalyst or by transesterification.

COMPOSITIONS AND METHODS

Provided herein are herbicidal compositions comprising an herbicidally effective amount of (a) aminopyralid, a compound of the formula (I)

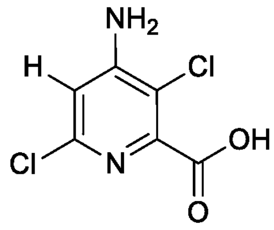

(I)

or an agriculturally acceptable salt or ester thereof, and (b) triclopyr choline salt, the choline salt of a compound of the formula (II)

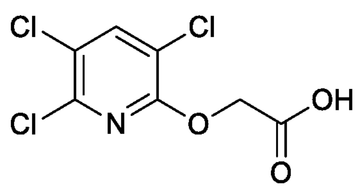

(II) .

Exemplary salts of a compound of formula (I) include the aminopyralid triisopropanolammonium, aminopyralid potassium and aminopyralid choline salts.

Provided herein are also methods of controlling undesirable vegetation comprising contacting the vegetation or the locus thereof, *i.e.,* area adjacent to the vegetation, with or applying to the soil or water to prevent the emergence or growth of vegetation an herbicidally effective amount of the compound of formula (I) or agriculturally acceptable salt or ester thereof and (b) of the choline salt of the compound of formula (II). In certain embodiments, the methods employ the compositions described herein.

Furthermore, in some embodiments, the combination of compound (I) or agriculturally acceptable salt or ester thereof and the choline salt of the compound (II) or agriculturally acceptable salt or ester thereof exhibits synergism, *e.g.*, the herbicidal active ingredients are more effective in combination than when applied individually. Synergism has been defined as "an interaction of two or more factors such that the effect when combined is greater than the predicted effect based on the response of each factor applied separately." Senseman, S., Ed. Herbicide Handbook. 9th ed. Lawrence: Weed Science Society of America, 2007. In certain embodiments, the compositions exhibit synergy as determined by Colby's equation. Colby, S.R. Calculation of the synergistic and antagonistic response of herbicide combinations. Weeds 1967 15, 20-22.

In certain embodiments of the compositions and methods described herein, the compound of formula (I), *i.e.,* the carboxylic acid, is employed. In certain embodiments, a carboxylate salt of the compound of formula (I) is employed.

In some embodiments, the compound of formula (I) or salt or ester thereof and the choline salt of the compound of formula (II) or salt or ester thereof, are formulated in one composition, tank mixed, applied simultaneously, or applied sequentially.

Herbicidal activity is exhibited by the compounds when they are applied directly to the plant or to the locus of the plant at any stage of growth. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, and the like, as well as the amount of chemical applied. These and other factors can be adjusted

to promote non-selective or selective herbicidal action. In some embodiments, the compositions described herein are applied as a post-emergence application, pre-emergence application, or in-water application to flooded paddy rice or water bodies (*e.g.*, ponds, lakes and streams), to relatively immature undesirable vegetation to achieve the maximum control of weeds.

In some embodiments, the compositions and methods provided herein are utilized to control weeds in crops or other settings, including but not limited to direct-seeded, water-seeded and transplanted rice, wheat, barley, oats, rye, sorghum, corn/maize, pastures, grasslands, rangelands, fallowland, turf, tree and vine orchards, aquatics, industrial vegetation management (IVM) and rights-of-way.

In certain embodiments, the compositions and methods provided herein are utilized to control weeds in rice. In certain embodiments, the rice is direct-seeded, water-seeded, or transplanted rice.

The compositions and methods described herein can be used to control undesirable vegetation on glyphosate tolerant-, glufosinate tolerant-, dicamba tolerant-, phenoxy auxin tolerant-, pyridyloxy auxin tolerant-, aryloxyphenoxypropionate tolerant-, acetyl CoA carboxylase (ACCase) inhibitor tolerant-, imidazolinone tolerant-, acetolactate synthase (ALS) inhibitor tolerant-, 4-hydroxyphenyl-pyruvate dioxygenase (HPPD) inhibitor tolerant-, protoporphyrinogen oxidase (PPO) inhibitor tolerant-, triazine tolerant-, and bromoxynil tolerant- crops (such as, but not limited to, soybean, cotton, canola/oilseed rape, rice, cereals, corn/maize, turf, etc), for example, in conjunction with glyphosate, glufosinate, dicamba, phenoxy auxins, pyridyloxy auxins, aryloxyphenoxypropionates, ACCase inhibitors, imidazolinones, ALS inhibitors, HPPD inhibitors, PPO inhibitors, triazines, and bromoxynil. The compositions and methods may be used in controlling undesirable vegetation in crops possessing multiple or stacked traits conferring tolerance to multiple chemistries and/or inhibitors of multiple modes of action. In some embodiments, the compound of formula (I) or salt or ester thereof and the choline salt of the compound of formula (II) are used in combination with herbicides that are selective for the crop being treated and which complement the spectrum of weeds controlled by these compounds at the application rate employed. In some embodiments, the compositions described herein and other complementary herbicides are applied at the same time, either as a combination formulation or as a tank mix.

The compositions and methods provided herein are utilized to control undesirable vegetation. Undesirable vegetation includes, but is not limited to, undesirable vegetation that occurs in rice, cereals, range and pasture, row crops (e.g., corn/maize, soybean, cotton, canola/oilseed rape), turf, trees, vines, and ornamental species, aquatic or non-crop settings, (*e.g.*, rights-of-way, IVM).

In some embodiments, the methods provided herein are utilized to control undesirable vegetation in rice. In certain embodiments, the undesirable vegetation is *Cyperus difformis* L. (smallflower flatsedge, CYPDI), *Cyperus esculentus* L. (yellow nutsedge, CYPES), *Cyperus iria* L. (rice flatsedge, CYPIR), *Cyperus rotundus* L. (purple nutsedge, CYPRO), *Eleocharis* species (ELOSS), *Fimbristylis miliacea* (L.) Vahl (globe fringerush, FIMMI), *Schoenoplectus juncoides* Roxb. (Japanese bulrush, SPCJU), *Schoenoplectus maritimus* L. (sea clubrush, SCPMA), *Schoenoplectus mucronatus* L. (ricefield bulrush, SCPMU), *Aeschynomene* species, (jointvetch, AESSS), *Alternanthera philoxeroides* (Mart.) Griseb. (alligatorweed, ALRPH), *Alisma plantago-aquatica* L. (common waterplantain, ALSPA), *Amaranthus* species, (pigweeds and amaranths, AMASS), *Ammannia coccinea* Rottb. (redstem, AMMCO), *Eclipta alba* (L.) Hassk. (American false daisy, ECLAL), *Heteranthera limosa* (SW.) Willd./Vahl (ducksalad, HETLI), *Heteranthera reniformis* R. & P. (roundleaf mudplantain, HETRE), *Ipomoea hederacea* (L.) Jacq. (ivyleaf morningglory, IPOHE), *Lindernia dubia* (L.) Pennell (low false pimpernel, LIDDU), *Monochoria korsakowii* Regel & Maack (monochoria, MOOKA), *Monochoria vaginalis* (Burm. F.) C. Presl ex Kuhth, (monochoria, MOOVA), *Murdannia nudiflora* (L.) Brenan (doveweed, MUDNU), *Polygonum pensylvanicum* L., (Pennsylvania smartweed, POLPY), *Polygonum persicaria* L. (ladysthumb, POLPE), *Polygonum hydropiperoides* Michx. (POLHP, mild smartweed), *Rotala indica* (Willd.) Koehne (Indian toothcup, ROTIN), *Sagittaria* species, (arrowhead, SAGSS), *Sesbania exaltata* (Raf.) Cory/Rydb. Ex Hill (hemp sesbania, SEBEX), or *Sphenoclea zeylanica* Gaertn. (gooseweed, SPDZE).

In some embodiments, the methods provided herein are utilized to control undesirable vegetation in cereals. In certain embodiments, the undesirable vegetation is *Cirsium arvense* (L.) Scop. (Canada thistle, CIRAR), *Galium aparine* L. (catchweed bedstraw, GALAP), *Kochia scoparia* (L.) Schrad. (kochia, KCHSC), *Lamium purpureum* L. (purple deadnettle , LAMPU), *Matricaria recutita* L. (wild chamomile, MATCH), *Matricaria matricarioides* (Less.) Porter (pineappleweed, MATMT), *Papaver rhoeas* L. (common poppy, PAPRH), *Polygonum convolvulus* L. (wild buckwheat, POLCO), *Salsola tragus* L. (Russian thistle, SASKR), *Stellaria media* (L.) Vill. (common chickweed, STEME), *Veronica persica* Poir. (Persian speedwell, VERPE), *Viola arvensis* Murr. (field violet, VIOAR), or *Viola tricolor* L. (wild violet, VIOTR).

In some embodiments, the methods provided herein are utilized to control undesirable vegetation in range and pasture. In certain embodiments, the undesirable vegetation is *Ambrosia artemisiifolia* L. (common ragweed, AMBEL), *Cassia obtusifolia* (sickle pod, CASOB), *Centaurea maculosa* auct. non Lam. (spotted knapweed, CENMA), *Cirsium arvense* (L.) Scop. (Canada thistle, CIRAR), *Convolvulus arvensis* L. (field bindweed, CONAR), *Euphorbia esula* L. (leafy spurge, EPHES), *Lactuca serriola* L./Torn. (prickly lettuce, LACSE), *Plantago lanceolata* L. (buckhorn plantain, PLALA), *Rumex obtusifolius* L. (broadleaf dock, RUMOB), *Sida spinosa* L. (prickly sida, SIDSP), *Sinapis arvensis* L. (wild mustard, SINAR), *Sonchus arvensis* L. (perennial sowthistle, SONAR), *Solidago* species (goldenrod, SOOSS),

*Taraxacum officinale* G.H. Weber ex Wiggers (dandelion, TAROF), *Trifolium repens* L. (white clover, TRFRE), or *Urtica dioica* L. (common nettle, URTDI).

In some embodiments, the methods provided herein are utilized to control undesirable vegetation found in row crops. In certain embodiments, the undesirable vegetation is *Cyperus esculentus* L. (yellow nutsedge, CYPES), *Cyperus rotundus* L. (purple nutsedge, CYPRO), *Abutilon theophrasti* Medik. (velvetleaf, ABUTH), *Amaranthus* species (pigweeds and amaranths, AMASS), *Ambrosia artemisiifolia* L. (common ragweed, AMBEL), *Ambrosia psilostachya* DC. (western ragweed, AMBPS), *Ambrosia trifida* L. (giant ragweed, AMBTR), *Asclepias syriaca* L. (common milkweed, ASCSY), *Chenopodium album* L. (common lambsquarters, CHEAL), *Cirsium arvense* (L.) Scop. (Canada thistle, CIRAR), *Commelina benghalensis* L. (tropical spiderwort, COMBE), *Datura stramonium* L. (jimsonweed, DATST), *Daucus carota* L. (wild carrot, DAUCA), *Euphorbia heterophylla* L. (wild poinsettia, EPHHL), *Erigeron bonariensis* L. (hairy fleabane, ERIBO), *Erigeron canadensis* L. (Canadian fleabane, ERICA), *Helianthus annuus* L. (common sunflower, HELAN), *Jacquemontia tamnifolia* (L.) Griseb. (smallflower morningglory, IAQTA), *Ipomoea hederacea* (L.) Jacq. (ivyleaf morningglory, IPOHE), *Ipomoea lacunosa* L. (white morningglory, IPOLA), *Lactuca serriola* L./Torn. (prickly lettuce, LACSE), *Portulaca oleracea* L. (common purslane, POROL), *Sida spinosa* L. (prickly sida, SIDSP), *Sinapis arvensis* L. (wild mustard, SINAR), *Solanum ptychanthum* Dunal (eastern black nightshade, SOLPT), or *Xanthium strumarium* L. (common cocklebur, XANST).

In some embodiments, the compositions and methods provided herein are utilized to control undesirable vegetation consisting of grass, broadleaf and sedge weeds. In certain embodiments, the compositions and methods provided herein are utilized to control undesirable vegetation including *Cyperus, Eclipta, Ludwigia, Rumex, Taraxacum* and *Urtica.*

In some embodiments, the combination of compound (I) or agriculturally acceptable ester or salt thereof and the compound of formula (II) are used to control *Cyperus iria* L. (rice flatsedge, CYPIR), *Eclipta prostrata* (L.) L. (eclipta, ECLAL), *Ludwigia linifolia* (ludwigia, LUDLI), *Taraxacum officinale* G.H. Weber ex Wiggers (dandelion, TAROF), *Rumex obtusifolia* L. (broadleaf dock, RUMOB) and common nettle (*Urtica dioica* L., URTDI) .

The compound of formula (I) or agriculturally acceptable salt or ester thereof and the choline salt of the compound of formula (II) may be used to control herbicide resistant or tolerant weeds. The methods employing the combination of a compound of formula (I) or agriculturally acceptable salt or ester thereof and the choline salt of the compound of formula (II) and the compositions described herein may also be employed to control herbicide resistant or tolerant weeds. Exemplary resistant or tolerant weeds include, but are not limited to, biotypes resistant or tolerant to acetolactate synthase (ALS) inhibitors, photosystem (II) inhibitors, acetyl CoA carboxylase (ACCase) inhibitors, synthetic auxins, photosystem (I) inhibitors, 5-enolpyruvylshikimate-3-phosphate (EPSP) synthase inhibitors, microtubule assembly inhibitors, lipid synthesis inhibitors, protoporphyrinogen oxidase (PPO) inhibitors, carotenoid biosynthesis inhibitors, very long chain fatty acid (VLCFA) inhibitors, phytoene desaturase (PDS) inhibitors, glutamine synthetase inhibitors, 4-hydroxyphenyl-pyruvate-dioxygenase (HPPD) inhibitors, mitosis inhibitors, cellulose biosynthesis inhibitors, herbicides with multiple modes-of-action such as quinclorac, and unclassified herbicides such as arylaminopropionic acids, difenzoquat, endothall, and organoarsenicals. Exemplary resistant or tolerant weeds include, but are not limited to, biotypes with resistance or tolerance to multiple herbicides, multiple chemical classes, and multiple herbicide modes-of-action.

In certain embodiments of the compositions and methods described herein, the compound of formula (I) or salt or ester thereof is used in combination with the compound of formula (II) or salt or ester thereof. With regard to the compositions, in some embodiments, the acid equivalent weight ratio of the compound of formula (I) or salt or ester thereof to the choline salt of the compound of formula (II) is within the range from about 1:750 to about 1:3.5. In certain embodiments, the acid equivalent weight ratio of the compound of formula (I) or salt or ester thereof to the choline salt of the compound of formula (II) is within the range from about 1:6 to about 1:1, from about1:120 to about 2.5:1, from about 1:100 to about 2.25:1, from about 1:50 to about 2:1, from about 1:25 to about 1.5:1, from about 1:15 to about 1.25:1, from about 1:10 to about 1.125:1 and from about 1:5 to about 1:1. In certain embodiments, the acid equivalent weight ratio of the compound of formula (I) or salt or ester thereof to the choline salt of the compound of formula (II) is within the range from about 1:3 to about 1:16. With respect to the methods, in certain embodiments, the methods comprise contacting the undesirable vegetation or locus thereof or applying to the soil or water to prevent the emergence or growth of vegetation a composition described herein. In some embodiments, the composition is applied at an application rate from about 32 grams active ingredient per hectare (g ae/ha) to about 1120 g ae/ha based on the total amount of active ingredients in the composition. In some embodiments, the methods comprise contacting the undesirable vegetation or locus thereof or applying to the soil or water to prevent the emergence or growth of vegetation with a compound of formula (I) or salt or ester thereof and the choline salt of a compound of formula (II) *e.g.*, sequentially or simultaneously. In some embodiments, the compound of formula (I) or salt or ester thereof is applied at a rate from about 3 grams acid equivalent per hectare (g ae/ha) to about 120 g ae/ha and the choline salt of the compound of formula (II) is applied at a rate from about 35 g ae/ha to about 2240 g ae/ha. In some embodiments, the compound of formula (I) or salt or ester thereof is applied at a rate from about 4 grams acid equivalent per hectare (g ae/ha) to about 60 g ae/ha and the choline salt of the compound of formula (II) is applied at a rate from about 12 g ae/ha to about 960 g ae/ha. In some embodiments, the compound of formula (I) or salt or ester thereof is applied at a rate from about 8 grams acid equivalent per hectare

(g ae/ha) to about 60 g ae/ha and the choline salt of the compound of formula (II) is applied at a rate from about 24 g ae/ha to about 960 g ae/ha. In certain embodiments, the methods utilize the compound of formula (I), or its triisopropanolammonium or potassium salt. In certain embodiments, the methods and compositions utilizing a compound of formula (I) or salt or ester thereof in combination with the choline salt of a compound of formula (II) or salt or ester thereof are used to control CYPIR, ECLAL, LUDLI, TAROF, RUMOB and URTDI.

The components of the mixtures described herein can be applied either separately or as part of a multipart herbicidal system.

The mixtures described herein can be applied in conjunction with one or more other herbicides to control a wider variety of undesirable vegetation. When used in conjunction with other herbicides, the composition can be formulated with the other herbicide or herbicides, tank mixed with the other herbicide or herbicides or applied sequentially with the other herbicide or herbicides. Some of the herbicides that can be employed in conjunction with the compositions and methods described herein include, but are not limited to: 4-CPA, 4-CPB, 4-CPP, 2,4-D, 2,4-D choline salt, 2,4-D esters and amines, 2,4-DB, 3,4-DA, 3,4-DB, 2,4-DEB, 2,4-DEP, 3,4-DP, 2,3,6-TBA, 2,4,5-T, 2,4,5-TB, acetochlor, acifluorfen, aclonifen, acrolein, alachlor, allidochlor, alloxydim, allyl alcohol, alorac, ametridione, ametryn, amibuzin, amicarbazone, amidosulfuron, aminocyclopyrachlor, amiprofos-methyl, amitrole, ammonium sulfamate, anilofos, anisuron, asulam, atraton, atrazine, azafenidin, azimsulfuron, aziprotryne, barban, BCPC, beflubutamid, benazolin, bencarbazone, benfluralin, benfuresate, bensulfuron-methyl, bensulide, bentazon, benthiocarb, benzadox, benzfendizone, benzipram, benzobicyclon, benzofenap, benzofluor, benzoylprop, benzthiazuron, bicyclopyrone, bifenox, bilanafos, bispyribac-sodium, borax, bromacil, bromobonil, bromobutide, bromofenoxim, bromoxynil, brompyrazon, butachlor, butafenacil, butamifos, butenachlor, buthidazole, buthiuron, butralin, butroxydim, buturon, butylate, cacodylic acid, cafenstrole, calcium chlorate, calcium cyanamide, cambendichlor, carbasulam, carbetamide, carboxazole, carfentrazone-ethyl, CDEA, CEPC, chlomethoxyfen, chloramben, chloranocryl, chlorazifop, chlorazine, chlorbromuron, chlorbufam, chloreturon, chlorfenac, chlorfenprop, chlorflurazole, chlorflurenol, chloridazon, chlorimuron, chlornitrofen, chloropon, chlorotoluron, chloroxuron, chloroxynil, chlorprocarb, chlorpropham, chlorsulfuron, chlorthal, chlorthiamid, cinidon-ethyl, cinmethylin, cinosulfuron, cisanilide, clethodim, cliodinate, clodinafop-propargyl, clofop, clomazone, clomeprop, cloprop, cloproxydim, clopyralid, cloransulam, cloransulam-methyl, CMA, copper sulfate, CPMF, CPPC, credazine, cresol, cumyluron, cyanatryn, cyanazine, cycloate, cyclopyrimorate, cyclosulfamuron, cycloxydim, cycluron, cyhalofop-butyl, cyperquat, cyprazine, cyprazole, cypromid, daimuron, dalapon, dazomet, delachlor, desmedipham, desmetryn, di-allate, dicamba, dichlobenil, dichloralurea, dichlormate, dichlorprop, dichlorprop-P, diclofop-methyl, diclosulam, diethamquat, diethatyl, difenopenten, difenoxuron, difenzoquat, diflufenican, diflufenzopyr, dimefuron, dimepiperate, dimethachlor, dimethametryn, dimethenamid, dimethenamid-P, dimexano, dimidazon, dinitramine, dinofenate, dinoprop, dinosam, dinoseb, dinoterb, diphenamid, dipropetryn, diquat, disul, dithiopyr, diuron, DMPA, DNOC, DSMA, EBEP, eglinazine, endothal, epronaz, EPTC, erbon, esprocarb, ethalfluralin, ethametsulfuron, ethbenzamide, ethidimuron, ethiolate, ethobenzamid, , ethofumesate, ethoxyfen, ethoxysulfuron, etinofen, etnipromid, etobenzanid, EXD, fenasulam, fenoprop, fenoxaprop, fenoxaprop-P-ethyl, fenoxaprop-P-ethyl + isoxadifen-ethyl, fenoxasulfone, fenquinotrione, fenteracol, fenthiaprop, fentrazamide, fenuron, ferrous sulfate, flamprop, flamprop-M, flazasulfuron, florasulam, fluazifop, fluazifop-P-butyl, fluazolate, flucarbazone, flucetosulfuron, fluchloralin, flufenacet, flufenican, flufenpyr-ethyl, flumetsulam, flumezin, flumiclorac-pentyl, flumioxazin, flumipropyn, fluometuron, fluorodifen, fluoroglycofen, fluoromidine, fluoronitrofen, fluothiuron, flupoxam, flupropacil, flupropanate, flupyrsulfuron, fluridone, flurochloridone, fluroxypyr, flurtamone, fluthiacet, fomesafen, foramsulfuron, fosamine, fumiclorac, furyloxyfen, glufosinate, glufosinate-ammonium, glufosinate-P-ammonium, glyphosate, halosafen, halosulfuron-methyl, haloxydine, haloxyfop-methyl, haloxyfop-P-methyl, hexachloroacetone, hexaflurate, hexazinone, imazamethabenz, imazamox, imazapic, imazapyr, imazaquin, imazosulfuron, indanofan, indaziflam, iodobonil, iodomethane, iodosulfuron, iodosulfuron-ethyl-sodium, iofensulfuron, ioxynil, ipazine, ipfencarbazone, iprymidam, IR-5790, isocarbamid, isocil, isomethiozin, isonoruron, isopolinate, isopropalin, isoproturon, isouron, isoxaben, isoxachlortole, isoxaflutole, isoxapyrifop, karbutilate, ketospiradox, lactofen, lenacil, linuron, MAA, MAMA, MCPA esters and amines, MCPA-thioethyl, MCPB, mecoprop, mecoprop-P, medinoterb, mefenacet, mefluidide, mesoprazine, mesosulfuron, mesotrione, metam, metamifop, metamitron, metazachlor, metazosulfuron, metflurazon, methabenzthiazuron, methalpropalin, methazole, methiobencarb, methiozolin, methiuron, methometon, methoprotryne, methyl bromide, methyl isothiocyanate, methyldymron, metobenzuron, metobromuron, metolachlor, metosulam, metoxuron, metribuzin, metsulfuron, metsulfuron-methyl, molinate, monalide, monisouron, monochloroacetic acid, monolinuron, monuron, morfamquat, MSMA, naproanilide, napropamide, naptalam, neburon, nicosulfuron, nipyraclofen, nitralin, nitrofen, nitrofluorfen, norflurazon, noruron, OCH, orbencarb, *ortho*-dichlorobenzene, orthosulfamuron, oryzalin, oxadiargyl, oxadiazon, oxapyrazon, oxasulfuron, oxaziclomefone, oxyfluorfen, paraflufen-ethyl, parafluron, paraquat, pebulate, pelargonic acid, pendimethalin, penoxsulam, pentachlorophenol, pentanochlor, pentoxazone, perfluidone, pethoxamid, phenisopham, phenmedipham, phenmedipham-ethyl, phenobenzuron, phenylmercury acetate, picloram, picolinafen, pinoxaden, piperophos, potassium arsenite, potassium azide, potassium cyanate, pretilachlor, primisulfuron-methyl, procyazine, prodiamine, profluazol, profluralin, profoxydim, proglinazine, prohexadione-calcium, prometon, prometryn, pronamide, propachlor, propanil, propaquizafop, propazine, propham, propisochlor, propoxycarbazone, propyrisulfuron, propyzamide, prosulfalin, prosulfocarb, prosulfuron, proxan, prynachlor, pydanon, pyraclonil, pyraflufen-ethyl, pyrasulfotole, pyrazogyl, pyrazolynate, pyrazosulfuron-ethyl, pyrazoxyfen, pyribenzoxim, pyributicarb, pyriclor, pyridafol, pyridate, pyriftalid, pyriminobac, pyrimisulfan, pyrithiobac-sodium, pyroxasulfone, pyroxsulam, quinclorac, quinmerac, quinoclamine, quinonamid, quizalofop, quizalofop-P-ethyl, rhodethanil, rimsulfuron, saflufenacil, S-metolachlor, sebuthylazine, secbumeton, sethoxydim, siduron, simazine, simeton, simetryn, SMA, sodium arsenite, sodium azide, sodium chlorate, sulcotrione, sulfallate, sulfentrazone, sulfometuron, sulfosate, sulfosulfuron, sulfuric acid, sulglycapin, swep, TCA, tebutam, tebuthiuron, tefuryltrione, tembotrione, tepraloxydim, terbacil, terbucarb, terbuchlor, terbumeton, terbuthylazine, terbutryn, tetrafluron, thaxtomin A, thaxtomin B, thenylchlor, thiazafluron, thiazopyr, thidiazimin, thidiazuron, thiencarbazone-methyl, thifensulfuron, thifensulfuron-methyl, thiobencarb, tiocarbazil, tioclorim, topramezone, tralkoxydim, triafamone, tri-allate, triasulfuron, triaziflam, tribenuron, tribenuron-methyl, tricamba, tridiphane, trietazine, trifloxysulfuron, trifluralin, triflusulfuron, trifop, trifopsime, trihydroxytriazine, trimeturon, tripropindan, tritac tritosulfuron, vernolate, xylachlor and salts, esters, optically active isomers and mixtures thereof.

In some embodiments, the compositions described herein are employed in combination with one or more herbicide safeners, such as 1-MCP, AD-67 (MON 4660), benoxacor, benthiocarb, brassinolide, cloquintocet (mexyl), cyometrinil, daimuron, dichlormid, dicyclonon, dimepiperate, disulfoton, fenchlorazole-ethyl, fenclorim, flurazole, fluxofenim, furilazole, harpin proteins, isoxadifen-ethyl, jiecaowan, jiecaoxi, mefenpyr-diethyl, mephenate, naphthalic anhydride (NA), oxabetrinil, R29148 and *N*-phenyl-sulfonylbenzoic acid amides, to enhance their selectivity. In some embodiments, the safeners are employed in rice, cereal, corn, or maize settings. In some embodiments, the safener is cloquintocet or an ester or salt thereof. In certain embodiments, cloquintocet is utilized to antagonize harmful effects of the compositions on rice and cereals. In some embodiments, the safener is cloquintocet (mexyl).

In some embodiments, compositions provided herein further comprise at least one agriculturally acceptable adjuvant or carrier. Suitable adjuvants or carriers should not be phytotoxic to valuable crops, particularly at the concentrations employed in applying the compositions for selective weed control in the presence of crops, and should not react chemically with herbicidal components or other composition ingredients. Such mixtures can be designed for application directly to weeds or their locus or can be concentrates or formulations that are normally diluted with additional carriers and adjuvants before application. They can be solids, such as, for example, dusts, granules, water-dispersible granules, or wettable powders, or liquids, such as, for example, emulsifiable concentrates, solutions, emulsions or suspensions. They can also be provided as a pre-mix or tank mixed.

Suitable agricultural adjuvants and carriers include, but are not limited to, crop oil concentrate; nonylphenol ethoxylate; benzylcocoalkyldimethyl quaternary ammonium salt; blend of petroleum hydrocarbon, alkyl esters, organic acid, and anionic surfactant; $C_9$-$C_{11}$ alkylpolyglycoside; phosphated alcohol ethoxylate; natural primary alcohol ($C_{12}$-$C_{16}$) ethoxylate; di-*sec*-butylphenol EO-PO block copolymer; polysiloxane-methyl cap; nonylphenol ethoxylate + urea ammonium nitrate; emulsified methylated seed oil; tridecyl alcohol (synthetic) ethoxylate (8EO); tallow amine ethoxylate (15 EO); PEG(400) dioleate-99.

Liquid carriers that can be employed include water and organic solvents. The organic solvents include, but are not limited to, petroleum fractions or hydrocarbons such as mineral oil, aromatic solvents, paraffinic oils, and the like; vegetable oils such as soybean oil, rapeseed oil, olive oil, castor oil, sunflower seed oil, coconut oil, corn oil, cottonseed oil, linseed oil, palm oil, peanut oil, safflower oil, sesame oil, tung oil and the like; esters of the above vegetable oils; esters of monoalcohols or dihydric, trihydric, or other lower polyalcohols (4-6 hydroxy containing), such as 2-ethyl hexyl stearate, *n*-butyl oleate, isopropyl myristate, propylene glycol dioleate, di-octyl succinate, di-butyl adipate, di-octyl phthalate and the like; esters of mono, di and polycarboxylic acids and the like. Specific organic solvents include, but are not limited to toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methyl alcohol, ethyl alcohol, isopropyl alcohol, amyl alcohol, ethylene glycol, propylene glycol, glycerine, *N*-methyl-2-pyrrolidinone, *N,N*-dimethyl alkylamides, dimethyl sulfoxide, liquid fertilizers and the like. In certain embodiments, water is the carrier for the dilution of concentrates.

Suitable solid carriers include but are not limited to talc, pyrophyllite clay, silica, attapulgus clay, kaolin clay, kieselguhr, chalk, diatomaceous earth, lime, calcium carbonate, bentonite clay, Fuller's earth, cottonseed hulls, wheat flour, soybean flour, pumice, wood flour, walnut shell flour, lignin, cellulose, and the like.

In some embodiments, the compositions described herein further comprise one or more surface-active agents. In some embodiments, such surface-active agents are employed in both solid and liquid compositions, and in certain embodiments those designed to be diluted with carrier before application. The surface-active agents can be anionic, cationic or nonionic in character and can be employed as emulsifying agents, wetting agents, suspending agents, or for other purposes. Surfactants which may also be used in the present formulations are described, *inter alia,* in "McCutcheon's Detergents and Emulsifiers Annual," MC Publishing Corp., Ridgewood, New Jersey, 1998 and in "Encyclopedia of Surfactants," Vol. I-III, Chemical Publishing Co., New York, 1980-81. Surface-active agents include, but are not limited to salts of alkyl sulfates, such as diethanolammonium lauryl sulfate; alkylarylsulfonate salts, such as calcium dodecylbenzenesulfonate; alkylphenol-alkylene oxide addition products, such as nonylphenol-Cis ethoxylate; alcohol-alkylene

oxide addition products, such as tridecyl alcohol-$C_{16}$ ethoxylate; soaps, such as sodium stearate; alkylnaphthalene-sulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; salts of mono and dialkyl phosphate esters; vegetable or seed oils such as soybean oil, rapeseed/canola oil, olive oil, castor oil, sunflower seed oil, coconut oil, corn oil, cottonseed oil, linseed oil, palm oil, peanut oil, safflower oil, sesame oil, tung oil and the like; and esters of the above vegetable oils, and in certain embodiments, methyl esters.

In some embodiments, these materials, such as vegetable or seed oils and their esters, can be used interchangeably as an agricultural adjuvant, as a liquid carrier or as a surface active agent.

Other exemplary additives for use in the compositions provided herein include but are not limited to compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, other herbicides, plant growth regulants, fungicides, insecticides, and the like and can be formulated with liquid fertilizers or solid, particulate fertilizer carriers such as ammonium nitrate, urea and the like.

In some embodiments, the concentration of the active ingredients in the compositions described herein is from about 0.0005 to 98 percent by weight. In some embodiments, the concentration is from about 0.0006 to 90 percent by weight. In compositions designed to be employed as concentrates, the active ingredients, in certain embodiments, are present in a concentration from about 0.1 to 98 weight percent, and in certain embodiments about 0.5 to 90 weight percent. Such compositions are, in certain embodiments, diluted with an inert carrier, such as water, before application. The diluted compositions usually applied to weeds or the locus of weeds contain, in certain embodiments, about 0.0003 to 15 weight percent active ingredient and in certain embodiments contain about 0.0008 to 10 weight percent.

The present compositions can be applied to weeds or their locus by the use of conventional ground or aerial dusters, sprayers, and granule applicators, by addition to irrigation or paddy water, and by other conventional means known to those skilled in the art.

## Examples

## Evaluation of Postemergence Herbicidal Activity of Mixtures under Field Conditions

### Methodology

These trials were conducted under field conditions in Ibague, Colombia; Geisenbrunn, Germany; and Montarges, France. Trial sites were located in commercially grown fields of common rice (*Oryza sativa*) or permanent pastures. The rice and pasture crops were grown using normal cultural practices for fertilization, seeding, and maintenance to ensure good growth of the crop and the weeds. The trials were conducted using normal research methodology. Trial plots were 2-3 meters (m) wide by 6 m long. All treatments were applied using a randomized complete block trial design with 3 to 4 replications per treatment. The trial sites had naturally occurring populations of weeds. The weed spectrum included, but was not limited to, *Cyperus iria* L. (rice flatsedge, CYPIR), *Eclipta prostrata* (L.) L. (eclipta, ECLAL), *Ludwigia linifolia* (ludwigia, LUDLI), *Taraxacum officinale* G.H. Weber ex Wiggers (dandelion, TAROF), *Rumex obtusifolius* L. (broadleaf dock, RUMOB) and *Urtica dioica* L. (common nettle, URTDI). The plots were treated with a postemergence foliar application 15 to 20 days after emergence of the rice or during the normal timing of herbicide application used for weed control in pastures/grasslands.

Treatments consisted of tank mixes of commercially available formulations of aminopyralid triisopropanolammonium salt (MILESTONE 240SL),triclopyr butotyl (GARLON4 480EC) and an experimental formulation of the aminopyralid potassium salt (GF-389), with all rice treatments tankmixed with adjuvant (CARRIER 80EC) at 0.5% volume per volume (vol/vol) but no adjuvant was used in any of the pasture treatments. The application volume was 200 liters per hectare (L/ha) of water. All applications were made using precision gas hand sprayers using a 2 m boom using flat fan (8002) nozzles to broadcast the treatments over the top of the target crop (rice and pastures) and weeds.

### Evaluation

The treated plots and control plots were rated blind at various intervals after application. Ratings were based of Percent (%) Visual weed control, where 0 corresponds to no injury and 100 corresponds to complete kill.

Data were collected for all trials and analyzed using various statistical methods.

Colby's equation was used to determine the herbicidal effects expected from the mixtures (Colby, S. R. Calculation of the synergistic and antagonistic response of herbicide combinations. Weeds 1967 15, 20-22).

The following equation was used to calculate the expected activity of mixtures containing two active ingredients, A and B:

$$\text{Expected} = A + B - (A \times B/100)$$

A = observed efficacy of active ingredient A at the same concentration as used in the mixture;

B = observed efficacy of active ingredient B at the same concentration as used in the mixture.

The results are summarized in Table 1.

**Table 1. Synergistic Herbicidal Weed Control of CYPIR, ECLAL and LUDLI at 11 to 18 DAA in Rice.**

| | | Visual Weed Control (%) | | | | | |
|---|---|---|---|---|---|---|---|
| Aminopyralid* | Triclopyr | CYPIR 18 DAA | | ECLAL 11 DAA | | LUDLI 11 DAA | |
| g ae/ha | g ae/ha | Obs | Exp* | Obs | Exp* | Obs | Exp* |
| 8 | - | 8 | - | 76 | - | 73 | - |
| 16 | - | 25 | - | - | - | - | - |
| - | 24 | 0 | - | 6 | - | 5 | - |
| - | 48 | 6 | - | - | - | - | - |
| 8 | 24 | 36 | 8 | 92 | 77 | 93 | 74 |
| 16 | 48 | 56 | 29 | - | - | - | - |
| Aminopyralid* | Triclopyr | CYPIR 11 DAA | | | | | |
| g ae/ha | g ae/ha | Obs | Exp* | | | | |
| 8 | - | 3 | - | | | | |
| 24 | - | 23 | - | | | | |
| - | 24 | 0 | - | | | | |
| - | 72 | 1 | - | | | | |
| 8 | 24 | 26 | 3 | | | | |
| 24 | 72 | 40 | 23 | | | | |

*Aminopyralid = triisopropanolammonium salt
CYPIR - rice flatsedge (*Cyperus iria*)
ECLAL - eclipta (*Eclipta prostrata* (L.) L.)
LUDLI - ludwigia (*Ludwigia linifolia*)
g ae/ha - grams of acid equivalent per hectare
Obs - percent control observed
Exp* - percent control expected by Colby equation
DAA = days after application

Table 2. Synergistic Herbicidal Weed Control of TAROF and RUMOB at 13 DAA in Pastures.

| | | Visual Weed Control (%) | | | | | |
|---|---|---|---|---|---|---|---|
| Aminopyralid* | Triclopyr | TAROF 13 DAA | | RUMOB 13 DAA | | TAROF 13 DAA | |
| g ae/ha | g ae/ha | Obs | Exp* | Obs | Exp* | Obs | Exp* |
| 60 | - | 57 | - | 82 | - | 45 | - |
| | 240 | 27 | - | - | - | - | - |

(continued)

| | | Visual Weed Control (%) | | | | | |
|---|---|---|---|---|---|---|---|
| Aminopyralid* | Triclopyr | TAROF 13 DAA | | RUMOB 13 DAA | | TAROF 13 DAA | |
| g ae/ha | g ae/ha | Obs | Exp* | Obs | Exp* | Obs | Exp* |
| - | 480 | - | - | 57 | - | - | - |
| - | 960 | - | - | - | - | 38 | - |
| 60 | 240 | 86 | 68 | - | - | - | - |
| 60 | 480 | - | - | 97 | 92 | - | - |
| 60 | 960 | - | - | - | - | 88 | 66 |

*Aminopyralid = potassium salt
TAROF = dandelion (*Taraxacum officinale* G.H. Weber ex Wiggers)
RUMOB = broadleaf dock (*Rumex obtusifolius* L.)
g ae/ha - grams of acid equivalent per hectare
Obs - percent control observed
Exp* - percent control expected by Colby equation
DAA = days after application

Table 3. Synergistic Herbicidal Weed Control of TAROF at 122 to 178 DAA in Pastures.

| | | Visual Weed Control (%) | | | | | |
|---|---|---|---|---|---|---|---|
| Aminopyralid* | Triclopyr | TAROF 122 DAA | | TAROF 178 DAA | | TAROFI 178 DAA | |
| g ae/ha | g ae/ha | Obs | Exp* | Obs | Exp* | Obs | Exp* |
| 60 | - | 80 | - | 73 | - | 73 | - |
| | 240 | 0- | - | - | - | - | - |
| - | 480 | - | - | 0 | - | - | - |
| - | 960 | - | - | - | - | 47 | - |
| 60 | 240 | 97 | 80 | - | - | - | - |
| 60 | 480 | - | - | 90 | 73 | - | - |
| 60 | 960 | - | - | - | - | 95 | 86 |

*Aminopyralid = potassium salt
TAROF = dandelion (*Taraxacum officinale* G.H. Weber ex Wiggers)
g ae/ha - grams of acid equivalent per hectare
Obs - percent control observed
Exp* - percent control expected by Colby equation
DAA = days after application

Table 4. Synergistic Herbicidal Weed Control of TAROF and URTDI at 342 to 378 DAA in Pastures.

| | | Visual Weed Control (%) | | | | | |
|---|---|---|---|---|---|---|---|
| Aminopyralid* | Triclopyr | TAROF 378 DAA | | TAROF 378 DAA | | URTDI 342 DAA | |
| g ae/ha | g ae/ha | Obs | Exp* | Obs | Exp* | Obs | Exp* |
| 60 | - | 40 | - | 40 | - | 17 | - |
| | 240 | 10 | - | - | - | 33 | - |
| - | 480 | - | - | - | 30 | - | - |

(continued)

| | | Visual Weed Control (%) | | | | | |
|---|---|---|---|---|---|---|---|
| Aminopyralid* | Triclopyr | TAROF 378 DAA | | TAROF 378 DAA | | URTDI 342 DAA | |
| g ae/ha | g ae/ha | Obs | Exp* | Obs | Exp* | Obs | Exp* |
| 60 | 240 | 75 | 46 | - | - | 92 | 45 |
| 60 | 480 | - | - | 92 | 58 | - | - |

*Aminopyralid = potassium salt
TAROF = dandelion (*Taraxacum officinale* G.H. Weber ex Wiggers)
URTDI = common nettle (*Urtica dioica* L.)
g ae/ha - grams of acid equivalent per hectare
Obs - percent control observed
Exp* - percent control expected by Colby equation
DAA = days after application

## Claims

**1.** A herbicidal composition comprising a herbicidally effective amount of:

(a) aminopyralid, a compound of the formula (I)

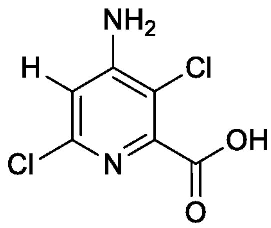

(I)

or an agriculturally acceptable salt or ester of thereof, and
(b) triclopyr choline salt, a choline salt of a compound of the formula (II)

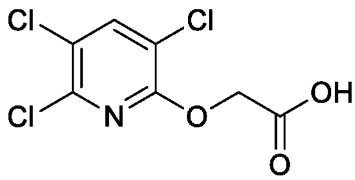

(II) .

**2.** The composition of claim 1, wherein (a) is the triisopropanolammonium, potassium or choline salt of compound (I) or wherein (a) is the compound of formula (I), which is the carboxylic acid.

**3.** The composition of any of claims 1-2, wherein the acid equivalent weight ratio of the compound of formula (I) or agriculturally acceptable salt or ester thereof to the salt of compound of formula (II) is from about 1:750 to about 1:3.5.

**4.** The composition of any of claims 1-3, further comprising an agriculturally acceptable adjuvant or carrier.

**5.** The composition of any of claims 1-3, which is synergistic as determined by the Colby equation.

6. A method of controlling undesirable vegetation which comprises contacting the vegetation or the locus thereof with or applying to the soil or water to prevent the emergence or growth of vegetation the composition of any of claims 1-5.

7. The method of claim 6, wherein the undesirable vegetation is controlled in rice, wheat, barley, oats, rye, sorghum, corn, maize, pastures, grasslands, rangelands, fallowland, turf, tree and vine orchards, aquatics, industrial vegetation management or rights-of-way.

8. The method of claim 6, wherein the undesirable vegetation is immature.

9. The method of claim 8, wherein the (a) and (b) are applied into water, wherein preferably the water is part of a flooded rice paddy.

10. The method of claim 6, wherein the (a) and (b) are applied pre-emergence or post-emergence.

11. The method of claim 6, wherein the undesirable vegetation is controlled in glyphosate-, glufosinate-, dicamba-, phenoxy auxins-, pyridyloxy auxins-, aryloxyphenoxypropionates-, acetyl CoA carboxylase inhibitors-, imidazolinones-, acetolactate synthase inhibitors-, 4-hydroxyphenyl-pyruvate dioxygenase inhibitors-, protoporphyrinogen oxidase inhibitors-, triazines-, or bromoxynil-tolerant crop, wherein the tolerant crop preferably possesses multiple or stacked traits conferring tolerance to multiple herbicides or inhibitors of multiple modes of action.

12. The method of claim 6, wherein the undesirable vegetation comprises an herbicide resistant or tolerant weed.

13. The method of claim 12, wherein the resistant or tolerant weed is a biotype with resistance or tolerance to multiple herbicides, multiple chemical classes, or inhibitors of multiple herbicide modes-of-action.

14. The method of claim 12, wherein the resistant or tolerant weed is a biotype resistant or tolerant to acetolactate synthase inhibitors, photosystem II inhibitors, acetyl CoA carboxylase inhibitors, synthetic auxins, photosystem I inhibitors, 5-enolpyruvylshikimate-3-phosphate synthase inhibitors, microtubule assembly inhibitors, lipid synthesis inhibitors, protoporphyrinogen oxidase inhibitors, carotenoid biosynthesis inhibitors, very long chain fatty acid inhibitors, phytoene desaturase inhibitors, glutamine synthetase inhibitors, 4-hydroxyphenyl-pyruvate-dioxygenase inhibitors, mitosis inhibitors, cellulose biosynthesis inhibitors, herbicides with multiple modes-of-action, quinclorac, arylaminopropionic acids, difenzoquat, endothall, or organoarsenicals.

## Patentansprüche

1. Eine herbizide Zusammensetzung umfassend eine herbizid wirksame Menge von:

(a) Aminopyralid, eine Verbindung der Formel (I)

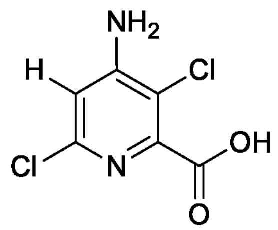

(I)

oder einem landwirtschaftlich akzeptablen Salz oder Ester davon, und
(b) Triclopyrcholinsalz, ein Cholinsalz einer Verbindung der Formel (II)

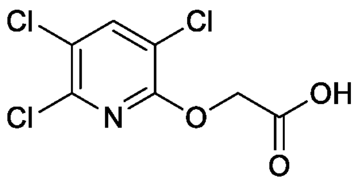

(II)

.

2. Die Zusammensetzung gemäß Anspruch 1, wobei (a) das Triisopropanolammonium-, Kalium- oder Cholinsalz der Verbindung (I) ist oder wobei (a) die Verbindung der Formel (I), welches die Carbonsäure ist, ist.

3. Eine Verbindung gemäß irgendeinem der Ansprüche 1 bis 2, wobei das Säureäquivalent-Gewichtsverhältnis der Verbindung der Formel (I) oder eines landwirtschaftlich akzeptablen Salzes oder Esters davon zu dem Salz der Verbindung der Formel (II) von etwa 1:750 bis etwa 1:3,5 beträgt.

4. Die Zusammensetzung gemäß irgendeinem der Ansprüche 1 bis 3, des Weiteren umfassend einen landwirtschaftlich akzeptablen Hilfs- oder Trägerstoff.

5. Die Zusammensetzung gemäß irgendeinem der Ansprüche 1 bis 3, welche synergistisch ist, wie nach der Colby-Gleichung bestimmt.

6. Ein Verfahren zur Bekämpfung unerwünschter Vegetation, welches das In-Kontakt-Bringen der Vegetation oder des Ortes derselben mit der Zusammensetzung gemäß irgendeinem der Ansprüche 1 bis 5 oder das Anwenden derselben auf den Boden oder Wasser umfasst, um das Auflaufen oder Wachstum der Vegetation zu verhindern.

7. Das Verfahren gemäß Anspruch 6, wobei die unerwünschte Vegetation in Reis, Weizen, Gerste, Hafer, Roggen, Sorghum-Hirse, Mais, Welschkorn, Wiesen, Grasland, Weideland, Brachland, Rasen, Baumschulen und Weingärten, in wässriger Umgebung, im industriellen Vegetationsmanagement oder entlang von Verkehrswegen bekämpft wird.

8. Das Verfahren gemäß Anspruch 6, wobei die unerwünschte Vegetation unreif ist.

9. Das Verfahren gemäß Anspruch 8, wobei (a) und (b) in Wasser angewandt werden, wobei das Wasser vorzugsweise Teil eines gefluteten Reisfeldes ist.

10. Das Verfahren gemäß Anspruch 6, wobei (a) und (b) im Vorauflauf oder im Nachauflauf angewandt werden.

11. Das Verfahren gemäß Anspruch 6, wobei die unerwünschte Vegetation in Nutzpflanzen bekämpft wird, die tolerant gegenüber Glyphosat, Glufosinat, Dicamba, Phenoxyauxinen, Pyridyloxyauxinen, Aryloxyphenoxypropionaten, Acetyl-CoA-Carboxylase-Hemmern, Imidazolinonen, Acetolactat-Synthase-Hemmern, 4-Hydroxyphenylpyruvinat-Dioxygenase-Hemmern, Protoporphyrinogenoxydase-Hemmern, Triazinen oder Bromoxynil sind, wobei die tolerante Nutzpflanze vorzugsweise mehrere oder gestapelte Merkmale besitzt, die Toleranz gegenüber mehreren Herbiziden oder Hemmern mehrerer Wirkweisen verleihen.

12. Das Verfahren gemäß Anspruch 6, wobei die unerwünschte Vegetation ein herbizidresistentes oder -tolerantes Unkraut umfasst.

13. Das Verfahren gemäß Anspruch 12, wobei das resistente oder tolerante Unkraut ein Biotyp mit Resistenz oder Toleranz gegenüber mehreren Herbiziden, mehreren chemischen Klassen oder Hemmern von mehreren Herbizidwirkweisen ist.

14. Das Verfahren gemäß Anspruch 12, wobei das resistente oder tolerante Unkraut ein Biotyp ist, der resistent oder tolerant gegenüber Acetolactat-Synthase-Hemmern, Photosystem-II-Hemmern, Acetyl-CoA-Carboxylase-Hemmern, synthetischen Auxinen, Photosystem-I-Hemmern, 5-Enolpyruvylshikimat-3-Phosphat-Synthase-Hemmern, Mikrotuboli-Anordnungshemmern, Lipid-Synthese-Hemmern, Protoporphyrinogen-Oxidase-Hemmern, Hemmern der Carotenoid-Biosynthese, Hemmern der Synthese sehr langkettiger Fettsäuren, Phytoendesaturase-Hemmern, Glutamin-Synthethase-Hemmern, 4-Hydroxyphenyl-Pyruvat-Dioxygenase-Hemmern, Mitose-Hemmern, Hemmern

der Cellulose-Biosynthese, Herbiziden mit mehreren Wirkweisen, Quinclorac, Arylaminopropionsäuren, Difenzoquat, Endothal oder Organoarsenverbindungen ist.

## Revendications

**1.** Composition herbicide comprenant une quantité à effet herbicide de :

(a) aminopyralide, un composé de formule (I)

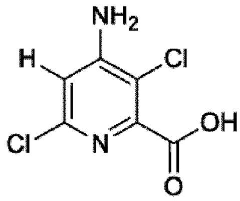

(I)

ou un sel ou ester acceptable en agriculture de ce composé, et
(b) sel de choline de triclopyr, un sel de choline d'un composé de formule (II)

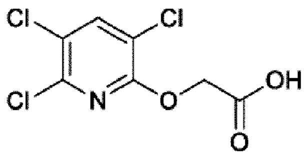

(II)

**2.** Composition selon la revendication 1, dans lequel (a) est le sel de triisopropanolammonium, potassium ou choline du composé (I) ou dans lequel (a) est le composé de formule (I), qui est l'acide carboxylique.

**3.** Composition selon l'une quelconque des revendications 1 et 2, dans laquelle le rapport pondéral d'équivalents d'acide du composé de formule (I) ou sel ou ester acceptable en agriculture de ce composé au sel du composé de formule (II) vaut d'environ 1:750 à environ 1:3,5.

**4.** Composition selon l'une quelconque des revendications 1 à 3, comprenant en outre un adjuvant ou une substance de support acceptables en agriculture.

**5.** Composition selon l'une quelconque des revendications 1 à 3, qui est synergique comme cela est déterminé par l'équation de Colby.

**6.** Procédé de lutte contre une végétation indésirable, qui comprend le fait de mettre en contact la végétation, ou le lieu où elle se trouve, avec, ou d'appliquer sur le sol ou l'eau pour empêcher la levée ou la croissance de la végétation, la composition selon l'une quelconque des revendications 1 à 5.

**7.** Procédé selon la revendication 6, dans lequel on lutte contre la végétation indésirable dans des cultures de riz, de blé, d'orge, d'avoine, de seigle, de sorgho, de maïs, des pâturages, herbages, prairies, jachères, du gazon, des vergers et vignobles, des plans d'eau, des zones d'aménagement végétal intégré ou des voies de passage.

**8.** Procédé selon la revendication 6, dans lequel la végétation indésirable est immature.

**9.** Procédé selon la revendication 8, dans lequel on applique les composés (a) et (b) dans de l'eau, de préférence l'eau faisant partie d'une rizière inondée.

**10.** Procédé selon la revendication 6, dans lequel on applique les composés (a) et (b) en pré-levée ou en post-levée.

**11.** Procédé selon la revendication 6, dans lequel on lutte contre la végétation indésirable dans une culture de plante qui est tolérante au glyphosate, au glufosinate, au dicamba, aux auxines de type phénoxy, aux auxines de type pyridyloxy, aux aryloxyphénoxypropionates, aux inhibiteurs de l'acétyl CoA carboxylase, aux imidazolinones, aux inhibiteurs de l'acétolactate synthase, aux inhibiteurs de la 4-hydroxyphényl-pyruvate dioxygénase, aux inhibiteurs de la protoporphyrinogène oxydase, aux triazines, ou au bromoxynil, la plante cultivée tolérante possédant de préférence des caractères multiples ou empilés conférant une tolérance à de multiples herbicides ou à des inhibiteurs à multiples modes d'action.

**12.** Procédé selon la revendication 6, dans lequel la végétation indésirable comprend une adventice résistante ou tolérante ou à des herbicides.

**13.** Procédé selon la revendication 12, dans lequel l'adventice résistante ou tolérante est un biotype à résistance ou tolérance à de multiples herbicides, de multiples classes chimiques, ou à des inhibiteurs à multiples modes d'action d'herbicides.

**14.** Procédé selon la revendication 12, dans lequel l'adventice résistante ou tolérante est un biotype résistant ou tolérant aux inhibiteurs de l'acétolactate synthase, aux inhibiteurs du photosystème II, aux inhibiteurs de l'acétyl CoA carboxylase, aux auxines synthétiques, aux inhibiteurs du photosystème I, aux inhibiteurs de la 5-énol-pyruvylshikimate-3-phosphate synthase, aux inhibiteurs de l'assemblage des microtubules, aux inhibiteurs de la synthèse des lipides, aux inhibiteurs de la protoporphyrinogène oxydase, aux inhibiteurs de la biosynthèse des caroténoïdes, aux inhibiteurs d'acides gras à très longue chaîne, aux inhibiteurs de la phytoène désaturase, aux inhibiteurs de la glutamine synthétase, aux inhibiteurs de la 4-hydroxyphényl-pyruvate dioxygénase, aux inhibiteurs de la mitose, aux inhibiteurs de la biosynthèse de la cellulose, à des herbicides à multiples modes d'action, au quinclorac, aux acides arylaminopropioniques, au difenzoquat, à l'endothall, ou aux organoarsénieux.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20100105558 A1
- US 20120184441 A1
- US 20090062127 A1
- US 20070191229 A1
- US 20070117721 A1


### Non-patent literature cited in the description


- **J. FERRELL et al.** *Weed Technology,* 2012, vol. 26, 554-558
- **C. R. MUDGE et al.** *US Army Corps of Engineers® ERDC/EL TN-11-3,* August 2011
- **H. TRAN et al.** *Proceedings of the 17th Australasian Weed Conference,* 2010, 372
- Herbicide Handbook. Weed Science Society of America, 2007
- Calculation of the synergistic and antagonistic response of herbicide combinations. **COLBY, S.R.** Weeds. 1967, vol. 15, 20-22
- McCutcheon's Detergents and Emulsifiers Annual. MC Publishing Corp, 1998
- Encyclopedia of Surfactants. Chemical Publishing Co, 1980, vol. I-III, 81
- **COLBY, S. R.** Calculation of the synergistic and antagonistic response of herbicide combinations. *Weeds,* 1967, vol. 15, 20-22